(19) **Europäisches Patentamt / European Patent Office / Office européen des brevets**

(11) **EP 1 261 142 B1**

(12) **EUROPEAN PATENT SPECIFICATION**

(45) Date of publication and mention
of the grant of the patent:
**09.07.2008   Bulletin 2008/28**

(51) Int Cl.:
*H04B 1/40* *(2006.01)*

(21) Application number: **01112404.7**

(22) Date of filing: **21.05.2001**

(54) **Dual mode transceiver architecture for digital wireless communication**

Architektur eines zweimodusfunkgrätes für ein digitales und schnurloses kommunikationssystem

Architecture d'émetteur-récepteur à deux modes pour un systeme de communication sans fil numerique

(84) Designated Contracting States:
**DE FR GB**

(43) Date of publication of application:
**27.11.2002   Bulletin 2002/48**

(73) Proprietor: **Sony Deutschland GmbH**
**10785 Berlin (DE)**

(72) Inventors:
 • **Eichel, Dirk**
**70327 Stuttgart (DE)**
 • **Landing, Mikael**
**70327 Stuttgart (DE)**

 • **Rebmann, Jochen**
**70327 Stuttgart (DE)**

(74) Representative: **Rupp, Christian et al**
**Mitscherlich & Partner**
**Patent- und Rechtsanwälte**
**Sonnenstrasse 33**
**80331 München (DE)**

(56) References cited:
**EP-A- 0 744 831          EP-A- 0 793 356**
**EP-A- 0 945 990          US-A- 4 322 856**

**Description**

FIELD AND BACKGROUND OF THE INVENTION

The present invention relates to wireless communication systems and, more particularly, to dual band mobile stations (MS) which must be able to transmit and receive in two separate frequency bands.

The world of wireless communication has been changing very rapidly over the last few years. Due to ever emerging new applications and dropping prices the demand has been growing explosively. The introduction of digital data communication in combination with digital signal processing has created the foundation for the development of many new wireless applications. High-quality digital wireless networks for voice communication with global and local coverage, like the GSM and the DECT system, are early examples of the wide variety of new wireless applications that will become available in the near future.

The new evolution in wireless communications set new requirements for the wireless interfaces, the so-called "transceivers" (wherein each transceiver consists of one transmitter and one receiver). A transceiver is the two-way interface. between an information source and the communication channel which will be used to exchange the information. The transmitter translates a data stream into a form which is suited for the communication channel. This "translation" is called modulation.

The specific nature of wireless communication channels makes that almost all receiver types for wireless applications consist of two parts: 1. a front-end part which performs the frequency downconversion, and 2. a back-end part in which the actual demodulation of the signal is performed. A third part, called the user-end, transforms the received information into a form suitable for the user. This part is however not considered to be part of the receiver. The basic way of the receiver operation is always the same: The downconverter mixes the antenna signal down from its high operating frequency to a suitable, lower frequency on which then the demodulation can be performed in an elegant way. The received antenna signal consists of a very broad spectrum of many different information channels and noise sources. The wanted signal is, in its modulated form, only a very small part of this broad spectrum. The front-end part converts this antenna signal in a signal that can be demodulated by the back-end part in a feasible way.

The receiver front-end has to be able to downconvert very small signals (e.g. a bandwidth of a few 100 kHz and an amplitude which can be as low as 5 $\mu V_{rms}$) from a high operating frequency (typically between 900 MHz and 2.4 GHz) to a much lower intermediate frequency (typically 10 MHz or lower) or to the baseband, where it can be demodulated. This small signal is present in a noisy environment and it can be sourrounded with other signals which can be as large as 300 m$V_{rms}$. This requires from the front-end a high operating frequency and, at the same time, a high input dynamic range. These specifications make that the front-end is always realized as an analog circuit which mainly consists of mixers, filters and variable gain amplifiers (VGAs) which, in successive stages, filter the antenna signal further and further, and downconvert it to lower frequencies to become finally a low frequency signal that consists only of the modulated wanted signal.

The demodulation technique that is used in the back-end part of the receiver mainly depends on two aspects: 1. the modulation technique that is applied, and 2. the type of front-end that is used. It is obvious that the type of demodulator depends on the modulation that has been performed: for an FM modulated signal an FM demodulator is required and for a QPSK modulated signal a QPSK demodulator is required.

A front-end has no influence on the form of the wanted signal, but it does determine the center frequency at which the wanted signal is provided to the back-end part. There are two possibilities: The wanted signal is either provided on an intermediate frequency (IF) or it is provided as a quadrature baseband signal.

Today, most new wireless applications use digital data communication which has many advantages such as high quality communication due to signal regeneration and error correction systems, computer control and the communication and integration of different services in one application. In a receiver for a digital wireless application the demodulation is always performed by a digital signal processor (DSP). Almost all these DSPs perform the demodulation on a quadrature baseband signal. The front-end for a digital wireless receiver must therefore produce these baseband quadrature I and Q signals. This, however, not necessarily has to be done in an analog way. The wanted signal must be downconverted to an intermediate frequency (IF, e.g. 10.7 MHz). After sampling, it can then be further downconverted to the baseband by the DSP. Thus, in this case, the final part of the front-end is digital.

The most often used receiver topology is, without any doubt, the heterodyne receiver. Its main feature is the use of an intermediate frequency (IF). For this reason the heterodyne receiver is often also called the IF receiver. Thereby, the received signal is downconverted from its carrier frequency (RF) to an intermediate frequency (IF) by multiplying it with a single sinusoidal signal. The signal can then be demodulated on this frequency or it can be further downconverted. Only in a single stage version the signal is not further downconverted.

The main disadvantage of an heterodyne receiver is that, apart from the wanted signal (WS), also an unwanted signal (US), called the mirror signal, is converted to the intermediate frequency (IF). Filtering a narrow channel that is centered at high frequencies and accompanied by large interferers demands filters with prohibitively high quality (Q) values. To bring the center frequency $f_{RF}$ of a received modulated signal

$$s_{RF}(t) = S_{RF} \cdot \cos(2\pi \cdot f_{RF}t + \Phi),$$

wherein
$f_{RF}$: center frequency of the received signal $s_{RF}(t)$,
$S_{RF}$: amplitude of the received signal $s_{RF}(t)$,
$\Phi$: phase of the received signal $s_{RF}(t)$,
from $f_{RF}$ to $f_{IF}$ ($f_{IF} < f_{RF}$) the signal is first mixed with a sinusoidal local oscillator (LO) signal

$$s_{LO}(t) = S_{LO} \cdot \cos(2\pi \cdot f_{LO}t + \Psi) \text{ with } f_{LO} := f_{RF} - f_{IF},$$

wherein
$f_{LO}$: frequency of the local oscillator signal $s_{LO}(t)$,
$S_{LO}$: amplitude of the local oscillator signal $s_{LO}(t)$,
$\Psi$: phase of the local oscillator signal $s_{LO}(t)$,
$f_{IF}$: intermediate frequency (IF),
thereby yielding a band $B_1$ around the intermediate frequency $f_2$ and another band $B_2$ around the frequency $2 \cdot f_{RF} - f_{IF}$. A lowpass filter then removes the latter. This operation is called "downconversion mixing". Because of its typically high noise, a downconversion mixer normally is preceded by a low-noise amplifier (LNA).

In a heterodyne architecture, these bands $B_1$ and $B_2$ are symmetrically located above and below the frequency $f_{LO}$ of the local oscillator (LO), respectively, and downconverted to the same intermediate frequency (IF). If the received band of interest (WS) is centered around

$$f_{RF} = f_{LO} - f_{IF} =: f_{WS} \quad (1),$$

wherein
$f_{WS}$: center frequency of the wanted signal (WS),
then the corresponding image (US) is centered around

$$2 \cdot f_{LO} - f_{RF} = f_{LO} + f_{IF} =: f_{US} \quad (2),$$

wherein
$f_{US}$: center frequency of the unwanted signal (US).
From (1) and (2) follows that $f_{IF} = \frac{1}{2} \cdot |f_{US} - f_{WS}|$ (*).
The downconversion of the wanted signal (WS) and the unwanted signal (US) to the intermediate frequency (IF) can be seen in the following trigonometric equation which shows the modulation of the received antenna signal $s_{RF}(t)$ with the sinusoidal local oscillator signal $s_{LO}(t)$:

$$s_{RF}(t) \cdot s_{LO}(t)$$
$$= S_{RF} \cdot [\cos(2\pi \cdot f_{WS}t + \Phi) + \cos(2\pi \cdot f_{US}t + \Phi)] \cdot S_{LO} \cdot \cos(2\pi \cdot f_{LO}t + \Psi)$$
$$= \frac{1}{2} \cdot S_{RF} \cdot S_{LO} \cdot [\cos(2\pi \cdot (f_{LO} - f_{WS})t - \Phi + \Psi) + \cos(2\pi \cdot (f_{LO} + f_{WS})t + \Phi + \Psi)$$
$$+ \cos(2\pi \cdot (f_{LO} - f_{US})t - \Phi + \Psi) + \cos(2\pi \cdot (f_{LO} + f_{US})t + \Phi + \Psi)].$$

Hence, the unwanted signal (US) has to be suppressed before it is mixed down to the intermediate frequency (IF). This is done by means of a high frequency (HF) filter. Such an HF filter can only be realized when the intermediate frequency (IF) is high enough because the wanted signal (WS) must be relatively far away from the unwanted signal (US), as can be seen from equation (*). Even when the ratio $f_{WS}/f_{IF}$ is as small as 10, the specifications for the HF filter are very severe. The HF filter must have a very high quality factor Q of 50 to 100, it must have a sufficiently high order (up to 6th order for high quality applications) and in some cases the center frequency must be tunable. A filter with these specifications can not be integrated. The accuracy requirements would, for a Q of 20 or more, be much too high for an integrated HF filter because their power consumption is proportional to $Q^2$, resulting in totally unacceptable power consumption specifications. HF filters are therefore always realized as discrete off-chip components, but these are very expensive and vulnerable in use. Off-chip components require extra handling, extra board space and an increased pin count, and they reduce the board yield. Their power consumption is high because they have to be driven at a low impedance (e.g. 50 Ω) to compensate for the large parasitic capacitances which are inherently present due to their large physical size.

Once the signal is downconverted to the intermediate frequency (IF), it has to be further filtered in order to obtain the wanted signal. This filter must also have a sufficiently high quality value Q (e.g. 50) and order (8th or 10th order). Integrating these IF filters is also very hard. Again, these are high quality discrete components and their use is very expensive compared to integrated components.

Integrated heterodyne receivers are well-known in many fields of the communications technology. They are characterized by a good image rejection and a good channel selectivity. Unfortunately these kind of receivers comprise several disadvantages: high realization costs, the necessity of a plurality of external components and a high power consumption. Image rejection mixers (IRM) represent an alternative to the above-mentioned receivers. However, IRM architectures are very sensitive to parameter variations, which leads to a worse suppression of the image frequency.

A low-cost solution with a very high degree of integration, a lower power consumption and the use of a lower power supply voltage are the goals set for new developments in wireless transceiver design. Many efforts have been devoted to the integration of such circuits in low-cost technology in order to reach the goal. Costs have been driven down by technology improvement and better design. What was previously available only in military applications is now available for the mass market. The rapidly growing market and ever emerging new applications create a high demand for a low cost, low power, high portability transceiver solution. The integrability and the power consumption reduction of the digital part will further improve with the continued downscaling of technologies.

However, the bottleneck for further advancement is the analog front-end. The analog front-end forms the interface between the antenna and the digital signal processor. For the analog front-end, integrability and power consumption reduction are closely related to the physical limitations of the transceiver topology and to the used technology.

Whereas a few years ago data was still being transmitted by means of extensive fixed network cables, it can be sent today from the sender to the receiver by means of radio waves in a simple, secure and low-cost way due to modern transmission and reception means. Radio-controlled networks today show a plurality of applications, for example in the industrial production, logistics and medicine technolgy. Even in the private environment the use of these networks has already become routine: cordless and cellular phones, pagers, radio controlled garage door openers, alarm systems, remote-controlled devices and machines, Global Positioning Systems (GPS), wireless Local Area Networks (WLAN), they all base on radio-controlled communications systems. Interoperability among the manufacturers and transmission rates similar to the classical Ethernet led to an enormous push of this technology. In the near future systems are supposed to come on the market that are able to perform even cordless voice communication beside conventional data communication by virtue of this WLAN infrastructure, that means convergence of voice and data even in the radio-controlled area. Several concerns have already announced new Access Points (APs) that shall be able to perform wireless voice transmission with Voice-over-IP (VoIP) handsets.

Radio-controlled mobile networks can adequately be used for stationary or slowly moving terminals (e.g. a user with a lap-top in the hand). Systems like DECT (Digital Enhanced Cordless Telecommunications), Bluetooth and all radio-controlled local area networks, including HIPERLAN, belong to this class. Compared with this, mobile networks as GSM, TETRAx and UMTS (Universal Mobile Telecommunications System) enable fast movement, but they are limited to relatively small multiplex rates of the radio interface up to now. The radio interface is simultaneously available to several terminals for communication. Therefore, the terminals must share the multiplex rate of the respective system. Numerous standards exist today which are optimized for different implementations. For voice, there are applications including DECT, AMPS, GSM, DCS, PCS, CDMA, and so on; for data, there are applications including IEEE 802.11 WLAN, HIPERLAN/2, Bluetooth, Home RF, and so on.

Wireless local area networks

In Wireless local area networks (WLANs) mobile stations - mostly Notebooks - can communicate over Access Points (AP) fitted at walls or ceilings of buildings by means of infrared or radio technology. Generally, these radio interfaces are connected to a wire-bound LAN. In some cases also peer-to-peer topologies are realizable. Whereas infrared solutions can economically get over short distances with visual contact, distances of about several kilometers can be managed by radio solutions. After proprietary systems have courted the favor of the customers for a long time, the US-American Institute of Electrical and Electronics Engineers (IEEE) passed the standard 802.11 for Wireless-LANs in 1997. This standard has its main roots in the Ethernet protocol for fixed networks and uses the 2.4-GHz band. For the data transfer two procedures are planned:

1. Frequency Hopping Spread Spectrum (FHSS) and
2. Direct Sequence Spread Spectrum (DSSS).

The date transfer rate is set down to 2 MBit/s. By means of cellular technique a good area covering can be achieved. Even roaming is supported - as with the cellular mobile radio the user does not notice that he is just moving into the area of another cell with his lap-top during a connection.

The bit rate of 2 MBit/s being technically behind at the standardization date and the lacking interoperability of the devices of different companies caused many manufacturers of mobile networks to additionally implement individual, more efficient transfer modes. In November 1999 a successor came with the IEEE 802.11b-Standard (also known as 802.11 High Rate) who raises the maximum transfer rate to 11 MBit/s.

In principle, with WLANs complete and also very large networks can be built which do not need any cables. How large these networks can be depends on how many Access Points (APs) can maximally be integrated into a network, and how many stations can be operated by an Access Point. Here there are considerably large differences. 100 or 1,000 MBit/s however - in the backbone not exceptional any more today -, can by far not be achieved even with the fastest WLAN technology.

The HIPERLAN standard

In the field of radio-controlled networks the performance requirements increase rapidly today. The 2.4-GHz band is exhausted now and the mobile technology must find a way to pass over to the 5-GHz band. The same applies for the already specified 802.11a standard (used transmission rates: principally 6 to 54 MBit/s - however, only 6, 12 and 24 MBit/s were already set down as transmission rates) as for the family of the HIPERLAN standards (High Performance Local Area Network). HIPERLAN was already being developed from 1991 to 1996 by the European Telecommunications Standards Institute (ETSI) - parallel to the IEEE 802.11 standard.

Although HIPERLAN type 1 exists already as a standard for several years, and although it offers Quality-of-Service (QoS) parameters and the handling of isochronal data traffic besides a high transmission rate of up to 24 MBit/s, this variant has not been able to catch on up to now. The big breakthrough did not occur. HIPERLAN/1 uses the Gaussian Minimum-Shift-Keying modulation (GMSK) and coexists with the existing WLANs in the 2.4-GHz band.

In order to be able to satisfy future demands on radio-controlled LANs, a new class of WLAN standards is necessary which supports Quality of Service (QoS), handover and data integrity. For the completion of the HIPERLAN/ 1-standard a new project was started in order to define the radio-controlled version of the Asynchronous Transfer Mode (ATM). This radio-controlled ATM project is known as HIPERLAN type 2 (HIPERLAN/2). HIPERLAN/2 was standardized by the ETSI within the scope of the project "Broadband Radio Access Network" (BRAN). This standard meets by far with a higher interest in the industry than HIPERLAN type 1. Of course, the radio-controlled ATM variant supports the same Quality-of-Service parameters (QoS) as the wire-bound version does.

In addition HIPERLAN/2 has numerous security services and an handover - when a movement occurs between local areas and wide areas or from private to public environments. HIPERLAN/2 shows a very high transmission rate of up to 54 MBit/s on the physical layer (PHY), and up to 36 MBit/s on the network layer (NET). In order to manage these high transmission rates, HIPERLAN/2 uses a modularisation method called Orthogonal Frequency Digital Multiplexing (OFDM) and the Medium Access Control protocol (MAC) which is based on dynamic TDMA/TDD.

The most important features of the HIPERLAN/2-technology are:

- a high-speed data transfer,
- a connection-orientated working method,
- a Quality-of-Service (QoS) support as with ATM,
- an automatic frequency definition,
- a support of security features,
- a mobility support,
- independence of network and application, and
- a power-saving working method.

A HIPERLAN/2-network typically consists of several cascadable access points (APs) which allow a complete or partial radio supply in a geographic area. Mobile terminals (MTs) communicate over the HIPERLAN/2 radio interface with the APs. The MTs can move within this field independently, and are supplied automatically by the best AP; an AP consists in this case of an Access Point Controller (APC) and one or several Access Point transceivers (APTs). The APs select automatically the optimal frequency channel, so that no frequency planning is necessary. When operated in the 5-GHz band, the MTs may move around the AP within a radius of about 50 meters. Connections are realized by TDMA/TDD over the air interface. In this case, two types of combinations are possible: point-to-point and point-to-multipoint. Point-to-point connections are bidirectional, whereas point-to-multipoint connections can only be unidirectionally (in direction to the respective MT).

ISM bands

The so-called ISM bands (ISM: Industrial, Science and Medicine) assigned by the World Administrative Radio Conference (WARC), allow to implement a series of services that are not allowed in other frequency bands, or that can be assigned only in long-term frequency allocation procedures. In particular, data services as keyless entry systems, garage door controls, alarm systems, etc., called "short range devices", can already be found today in these frequency bands. But even information systems and communications systems used for house automatization can increasingly be found in these frequency bands.
The challenge of wireless data transmission is the limited available bandwidth of the radio channel at high data rates. Especially in indoor WLAN systems the multi-chain radio channel is another limiting factor. The requirement of high transmission bandwidths due to the high data rates led to the use of the "Industrial Scientific Medical" (ISM) bands. As WLAN systems are not the only operators in the ISM bands, WLAN systems have to be robust against disturbances of other systems. Two possible WLAN standards for the ISM bands are the IEEE 802.11 standard and the Bluetooth standard.

The IEEE 802.11 standard

The standard IEEE 802.11 describes the functions and services which are needed for the construction of IEEE 802.11 networks. Therefore, procedures and signaling techniques are defined on the physical layer (PHY), as encrypting procedures in order to guarantee the secrecy of the user data. IEEE 802.11 was developed for the use in said ISM bands. The Federal Communications Commission (FCC) - the regulation authority of the United States of America - has therefore prescribed maximum transmission powers, limits for the outer-band radiation and the use of spread spectrum procedures for the noise reduction of already existing communications systems. For this purpose, the frequency bands of 902 to 928 MHz, 2,400 to 2,483.5 MHz, 5,150 to 5,350 MHz and 5,725 to 5,825 MHz were determined as ISM bands. IEEE 802.11 defines two different transmission methods on the physical layer (PHY) in the 2.4-GHz frequency band:

1. Frequency Hopping Spread Spectrum (FHSS), and
2. Direct Sequence Spread Spectrum (DSSS).

A further alternative represents the use of an infrared-in-terface. The available data rate for an IEEE 802.11 user is 1 MBit/s or 2 MBit/s, optionally. Besides, a modem with a transmission rate of 20 MBit/s at 5 GHz was specified some years ago that uses the frequency bands released by the FCC for the so-called Unlicensed National Information Infrastructure (U-NII):

| Band of operation [GHz] | Maximum transmit power [mW] |
| --- | --- |
| 5.15 to 5.25 | 50 |
| 5.25 to 5.35 | 250 |
| 5.725 to 5.825 | 1,000 |

Bluetooth 1.0
Since summer 1999 the standard Bluetooth 1.0 exists which works just the same as IEEE 802.11. In contrast to the IEEE 802.11 standard it uses an especially small transceiver (transmitter/receiver) unit however. Bluetooth works at the 2.4-GHz band as IEEE 802.11a and IEEE 802.11b. The signals are converted by Frequency Hopping (FH). Aside from the band-width - the multiplex data rate at the radio interface is about 700 kBit/s - the range is also limited (approximately 10...100 m). Hence, the application of this technology is virtually limited to the private area or to small offices. But up to eight devices can be connected with each other. Thus, notebooks, personal computers, modems, printer, radio controls, Personal Digital Assistants (PDA) and other digital accessories in the narrow environment can communicate with each other.

It is foreseeable, that the usage of radio-controlled network technologies will increase in the near future, and new fields of application will be opened.

With the allocation of 300 MHz of bandwidth in the 5 GHz frequency band by the Federal Communication Commission (FCC) for the Unlicensed National Information Infrastructure (U-NII), high data-rate (up to 54 MBit/s) wireless local area networks (WLAN) become increasingly popular and important for mobile computing devices such as laptop computers. The European counterpart is the HIPERLAN system, which also operates in the 5 GHz band. In order to meet the potentially high demand for such wireless LAN products, low-cost silicon-based radio frequency (RF) transceiver front-ends, each consisting of a transmitter and a receiver with corresponding antennas, are essential. There have been a number of 5 GHz silicon transmit or receive integrated circuits reported in the literature.

The evolution of economical Application-Specific Integrated Circuit (ASIC) elements in the last years allows a power-saving, highly integrated and economical evolution of radio frequency transmitters. Aside from the suitable selection of the components for the sending and receiving components which considerably influence the range and the board space required by the circuit, in particular the possibility of an integrated solution for the antenna represents an essential mile-stone for low-cost circuits. Today individual transmitter and receiver circuits as well as complete transceiver circuits are already available with and without integrated antenna for a frequency range around 434 MHz. Further developments for a frequency range around 868 MHz as well as in the field of the circuits for 2.45 GHz and 5.8 GHz application are available today as demonstrator systems. Whereas the frequency range around 434 MHz is already used by a large number of systems, the area around 868 MHz is still less used by applications systems. A further frequency band around 915 MHz on the other hand is reserved for the US-American communications systems. The other bands at 2.45 GHz and 5.8 GHz are already been useful today for communications systems as identification systems, control systems, wireless data transceivers as well as for WLAN applications. With new modulation methods, as for example Direct Sequence Spread Spectrum (DSSS), it is possible to build up a secure data communication also with difficult channel conditions.

Current commercial approaches utilize several high quality discrete components to provide high performance required by the transceivers. High component counts and multiple chips in various technologies increase the cost and form factor. A higher integration level is required to lower the cost and form factor. Many efforts are underway to increase the integration level of the transceiver. The ultimate goal would be a single chip transceiver in a single technology with a minimum number of off-chip components, that is, an antenna to receive or transmit the radio frequency (RF) signal, a power supply, and a crystal reference to provide a clean frequency reference. This single chip would act as an interface between the analog RF world and the digital baseband world. With high integration level, cost and form factor is reduced.

However, many difficulties remain in the process of integration due to the lack of high quality components on chip. In a conventional double conversion receiver, the received signal spectrum is shifted down to the baseband in two steps. During the first step, a local oscillator (RF LO) signal at the radio frequency (RF) is mixed with the radio frequency signal, shifting the signal to a fixed intermediate frequency. To achieve this, the RF LO needs to be tunable and the minimum frequency step must be smaller or equal to the channel spacing of the standard. Then a fixed local oscillator (IF LO) at the intermediate frequency (IF) is used to shift the mixed down version of the received signal to baseband. The RF LO utilizes a low-phase-noise voltage controlled oscillator (VCO) which is coupled to a reference oscillator by a frequency synthesizer loop of low bandwidth. The low bandwidth is desirable in order to minimize the spurious tones in the output frequency spectrum that result from the frequency comparison process. One consequence of the low synthesizer control bandwidth is that the phase noise of the overall synthesizer is dominated by the phase noise of the VCO. This makes the narrow loop bandwidth approach suitable for the implementation with discrete high quality components that is needed by the low phase noise VCO. The need for the external components is not amenable to the integration of the synthesizer.

A transceiver front-end has to perform three tasks in both the receive chain (RX) and the transmit chain (TX):

- The center frequency of the modulated wanted signal has to be changed from a low frequency to a very high frequency (in the TX chain) or from a very high frequency to a low frequency (in the RX chain).

- All unwanted signals outside the wanted signal channel have to be suppressed so that they do not interfere with the correct operation of the wireless communication link and the digital modem.

- The signal levels have to be adjusted in order to obtain the highest possible performance.

The transceiver front-end does not make any changes to the shape or form of the modulated signal. This is done in the back-end at low frequencies by means of the modulation and demodulation process. A receiver or transmitter will therefore almost always be realized as a string of operations where each operation is either one of the following three frequency domain operations:

1. a filter, for the suppression of signals outside the wanted signal channel,
2. an amplifier, to adjust the wanted signal level, and
3. a mixer, to change the center frequency.

From the previous conclusions it may seem that there are not many transmitter and receiver architectures possible. They must after all be a sequence of one or more times a bandpass filter, followed by a variable gain amplifier (VGA) that readjusts the gain, followed by a multiplication with a sine wave generated by a local oscillator (LO). The design of a transceiver consists then of a proper choice of the bandwidth of the bandpass filters, the gain of the VGA and the frequencies of the LO. The only architecture choice that can be made is in how many of these stages the up- or downconversion is done.

In document US 5,732,330 a transceiver is disclosed having two different voltage controlled oscillators (VCOs) for the two modes of operation, one VCO for the Personal Communication Services (PCS) carrier frequency, the other VCO for the other operating frequency band. The receiver chains do not share components between the two frequency bands of operation up to a further intermediate frequency (IF) processing stage. The transceiver architecture is limited to the frequency bands in accordance with the GSM or the DCS standard, respectively.

In document EP 0 878 917 A2 a transceiver is disclosed wherein the transceiver architecture is limited to 75 MHz operation in the upper band and to the DCS standard. Furthermore, said transceiver is limited to 25 MHz operation in the lower band and to the GSM standard.

Document EP 1 059 734 A2 shows a transceiver architecture using two separate chains for the two frequency bands, wherein only one VCO is used as a frequency synthesizer for both chains.

In document EP 0 744 831 A2 a wireless unit having a reception path and a transmission path for receiving and transmitting signals is disclosed. In the transmitting path a mixer is included which can be selectively provided with two reference frequencies of two frequency synthesizing means. The reception path comprises two reception chains and the transmitting path also comprises two transmitting chains.

From EP 0 793 356 A2 a transceiver with a switchable frequency band is disclosed comprising a mixer which can be supplied with two different reference frequencies provided by a first frequency synthesizing means and a further mixer supplied with a further reference frequency which is independently provided with a further reference frequency.

Document US 5,640,694 discloses an integrated RF avionics system having a common IF interface for diverse functions, such as radar, electronic waveform(EW) and communications/navigation/identification(CNI). The interface uses a segmented band of IF frequencies which are subdivided into two or more individual band segments separated by a guard band segment. The lower frequency band segment comprises a narrow band segment which is assigned to radar functions while the other or upper band segment comprises a wideband segment assigned to other functions such as EW and CNI functions. The guard band is not used for signal transmission, but is left unused to permit bandpass filters to reject signals in the adjacent unwanted segment, thus achieving frequency separation across the IF band while allowing the use of common hardware.

Document GB 2 320 631 discloses a dual mode radio frequency receiver or transmitter capable of operating in a terrestrial mode in which signals are routed over a terrestrial network, and a satellite mode in which signals are routed over a satellite network. The radio frequency receiver includes a terrestrial front-end RF stage which receives signals from a terrestrial network, a satellite front-end RF stage which receives signals from a satellite network, and a common RF stage which includes mixing circuitry for frequency down-converting the signals received from the front-end RF stages.

DEFICIENCIES AND DISADVANTAGES OF THE KNOWN SOLUTIONS OF THE PRESENT STATE OF THE ART

Common dual mode transceiver architectures are using separated receive (RX) and transmit (TX) chains for the different operation frequency bands. Consequently, the number of the used components and the power consumption is very high as each chain has its own filters, mixers and amplifiers. For example, transceivers covering one 2.4 GHz ISM and one band within a 5 GHz to 6 GHz range have the problem of increased power consumption due to two independent receive (RX) and transmit (TX) chains. Because of the required image rejection of the receiver, these transceivers are limited to narrow band operation in the 5 GHz to 6 GHz range.

Many conventional transceivers show furthermore the restriction that they can only be operated in combination with standards that provide a limited bandwidth. In document EP 0 878 917 A2 a transceiver is disclosed wherein the transceiver architecture is limited to 75 MHz narrow-band operation in the upper band and to the DCS standard. Furthermore, said transceiver is limited to 25 MHz narrow-band operation in the lower band and to the GSM standard.

In addition conventional transceivers in accordance with the present state of the art do not imply sufficient possibilities for the suppression of interferences due to adjacent channels.

OBJECT OF THE UNDERLYING INVENTION

In view of the explanations mentioned above, the object of the invention is the provision of a new dual band receiver/transmitter architecture with a reduced number of components in order to obtain lower cost, smaller board size and complexity, and lower power consumption. This object is achieved by means of the features of the independent patent claims. Advantageous features are defined in the dependent patent claims.

SUMMARY OF THE INVENTION

The underlying invention refers to a new dual band receiver and transmitter architecture according to claims 1 and 2, respectively, as well as to a new dual band transceiver architecture being able to receive and/or transmit modulated radio frequency (RF) signals operating on at least two different frequency ranges.

The solution proposed by a first preferred embodiment of the underlying invention covers all bands in the range of 5,150 MHz to 5,850 MHz and the ISM band at 2.450 GHz. In this particular design only one intermediate frequency (IF) stage is used. The claimed dual mode transceiver architecture 100 is provided with means for a sufficient image rejection to fulfil the requirements of the HIPERLAN/2 standard. Finally, the claimed dual mode transceiver architecture 100 can easily be expanded to other transceiver architectures known from the art.

For the particular design of a second preferred embodiment of the underlying invention it is necessary to have more than one intermediate frequency (IF) because of the constraints between image rejection and channel selectivity:

- High frequency (HF) channel select filters do not have enough adjacent channel rejection.

- Low frequency (LF) channel select filters, however, may have the necessary adjacent channel attenuation, but the image frequencies fall into the band of the antenna filter for broad band operation.

The underlying invention comprises a complete transceiver architecture for two different frequency bands using a high first intermediate frequency ($IF_1$) for approximately 1 GHz wide band operation and image rejection. The high first intermediate frequency ($IF_1$) local oscillator (IF LO) and the lower second intermediate frequency ($IF_2$) chain are shared between 2.450 GHz and 5.150 GHz to 5.875 GHz operation to reduce the number of the used components and the power consumption of the claimed dual mode transceiver in order to achieve savings in cost, complexity, size and energy. Using a frequency doubler allows wide band operation with a narrow tuning range voltage controlled oscillator (VCO) within the frequency band of 1,990 MHz to 2,250 MHz.

In accordance with the underlying invention, for the high first intermediate frequency ($IF_1$) a value of 1,200 MHz is chosen, which is approximately 120% of the covered frequency range in the 5.150 GHz to 5.875 GHz band. The mirror frequency is then in the range of 2,750 MHz to 3,450 MHz. An image suppression of 35 dB is achievable. With two filters in series it is possible to fulfil the HIPERLAN/2 requirements. A lower second intermediate frequency ($IF_2$) and corresponding intermediate frequency (IF) filtering means are used to remove adjacent channel interferers.

In this approach the lower second intermediate frequency ($IF_2$) chain and the frequency generation are shared between two modes of operation which reduces the complexity of the dual mode transceiver and reduces power consumption. Due to the usage of a high first intermediate frequency ($IF_1$) in the range of approximately 120% of the covered bandwidth (approx. 1 GHz) it is possible to support multiple bands (IEEE 802.11a, HIPERLAN/2 indoor and outdoor, U-NII) in the 5.150 GHz to 5.875 GHz area.

Compared with the cited documents of the prior art mentioned above, several differences can be found:

- The transceiver disclosed in EP 0 878 917 A2 does not use diversity switching at the antenna. Compared with this, the present invention contains means for a diversity switching at the antenna.

- In contrast to the disclosed transceiver of EP 0 878 917 A2 the claimed transceiver architecture in accordance with the underlying invention does not need any diplexer as antenna filters.

- In document EP 0 878 917 A2 the GSM band intermediate frequency (IF) is used as a first intermediate frequency ($IF_1$) and the filter in the receive chain is used as a first filter. To achieve better selectivity to suppress the adjacent channels, the claimed transceiver architecture in accordance with the underlying invention uses a different intermediate frequency instead of using the 2.450 GHz band as a first intermediate frequency ($IF_1$).

The main advantageous differences between the underlying invention and the state of the art are:

a) wide band operation for the range between 5.150 GHz and 5.875 GHz due to a first intermediate frequency ($IF_1$)

of approximately 120% of the used bandwidth,

b)low power consumption due to component sharing between the two operation modes, and

c)use of a half frequency voltage controlled oscillator 243 (VCO3) and a frequency doubler 244 for wide band operation.

In said second preferred embodiment of the underlying invention a frequency doubler circuit reduces the tuning range of the voltage controlled oscillator 243 (VCO3) by a factor of two. Furthermore, the phase noise (PN) increases by an amplitude offset of

$$\Delta N_{PN} = 20 \cdot lg(2) \approx 6 \text{ dB.}$$

Neverthereless, VCOs operated at 2 GHz are much better in phase noise than VCOs operated at 4 GHz to 5 GHz. The increase in phase noise due to said frequency doubling can be more than compensated by the use of the better performing 2-GHz VCOs.

In comparison with known solutions according to the present state of the art, the solution proposed by the underlying invention manages with a much lower power consumption. Further, it has an useful effect that all circuit elements used within the scope of said solution can be implemented with cheap components without thereby decreasing the quality of the data transfer. When being applied within the scope of portable mobile telecommunications devices, the claimed dual mode transceiver architecture according to the underlying invention can advantageously be integrated into conventional mobile stations due to its small number of components, its reduced board size and weight, its low power consumption, and its low cost.

BRIEF DESCRIPTION OF THE DRAWINGS

Further advantages and suitabilities of the underlying invention result from the subordinate claims as well as from the following description of two preferred embodiments of the invention which are depicted in the following drawings. In this case shows

FIG. 1    a functional block diagram 100 for a minimized ver-sion of the dual mode transceiver architecture for wireless communication in accordance with the first embodiment of the underlying invention, and

FIG. 2    a functional block diagram 200 for a specialized version of the dual mode transceiver architecture for wireless communication in accordance with the second embodiment of the underlying invention.

DETAILED DESCRIPTION OF THE UNDERLYING INVENTION

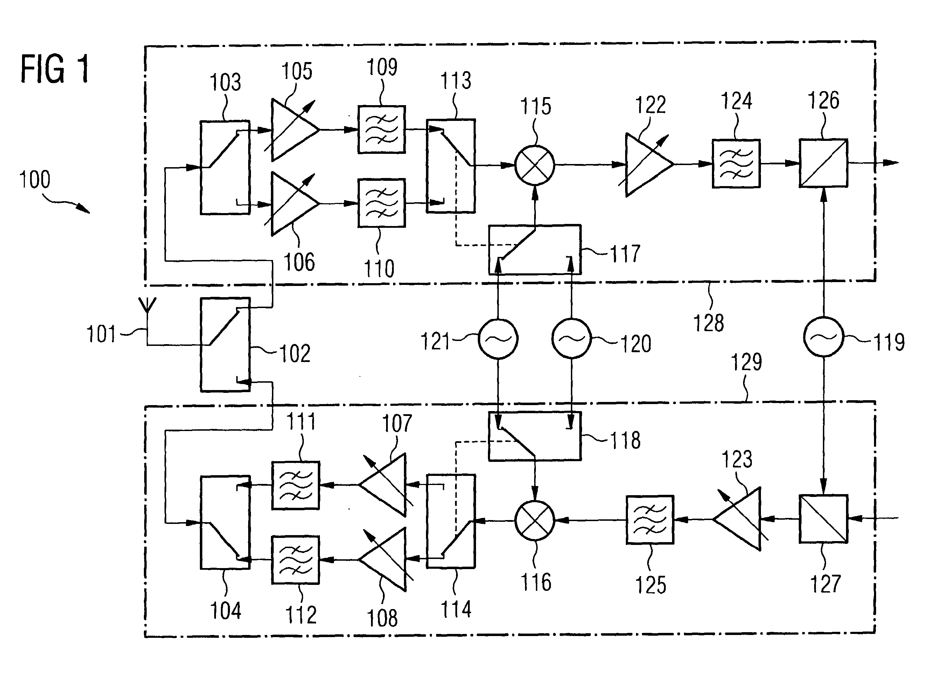

In the following the functions of the components comprised in a first embodiment of the underlying invention as depicted in block diagram 100 of figure 1 are explained.

The aforementioned block diagram 100 comprises a dual mode transceiver architecture for transmitting and receiving modulated radio frequency (RF) signals operating on at least two different frequency ranges in accordance with patent claims 3 to 11, having a first transmission chain ($TX_1$) and a first reception chain ($RX_1$) for a first frequency range, and a second transmission chain ($TX_2$) and a second reception chain ($RX_2$) for a second frequency range. The claimed dual mode transceiver according to said first embodiment shows a symmetrical architecture as the structure of said receive chains is identical with that of said transmit chains.

When receiving a modulated RF signal from the antenna 101, a receive (RX) chain can be selected for either 2.450 GHz ISM operation (according to the IEEE 802.11b standard) or 5.150 GHz to 5.875 GHz operation by a TX/RX selection switch 102. When transmitting a modulated RF signal, a transmit (TX) chain can also be selected for either 2.450 GHz ISM operation (according to the IEEE 802.11b standard) or 5.150 GHz to 5.875 GHz operation by said TX/RX selection switch 102. Both said TX and said RX chain can also be applied separately within the scope of the corresponding transmitter and receiver devices, respectively.

The said receive chain comprises a switch 103 for switching between 2.450 GHz ISM or 5.150 GHz to 5.875 GHz operation, bandpass filtering means 109, 110 and 124 for band selection and/or image rejection, respectively, amplifying means 105, 106 and 122 for adjusting the signal amplitude of the received signal, at least one mixer 115 for a signal downconversion of a received signal frequency within said first or second reception range, respectively, and demodulation means 126 for demodulating a modulated signal which outputs the data signal to be received.

After a first amplification of the received (RX) 2.450 GHz signal with a first variable gain amplifier 105 (VGA) used as a low noise amplifier (LNA), a first RF bandpass filter 109 is employed in order to perform a band selection and/or an image rejection. When receiving a RF signal within the bandwidth of 5.150 GHz to 5.875 GHz, a first amplification of the received (RX) 5.150 GHz to 5.875 GHz signal with a first variable gain amplifier 106 (VGA) used as a low noise amplifier (LNA) is done, and a first RF bandpass filter 110 is employed in order to perform a band selection and/or an image rejection. A switch 113 coupled to the switch 117 serves to select the corresponding 2.450 GHz RX or 5.150 GHz to 5.875 GHz signal, respectively, for further signal processing. With the aid of the mixer 115 the received signal is downconverted to an intermediate frequency (IF) at 280 MHz. A second variable gain amplifier 122 (VGA) serves to readjust the signal amplitude of the downconverted signal. It is followed by a band-pass filter 124 (centered around 280 MHz) used for filtering the downconverted signal and removing unwanted mixing products. Finally, the received signal is led to a demodulator 126 which demodulates the downconverted RF signal to the baseband and outputs the data signal to be received.

In case of transmit operation, an analog baseband signal representing the data signal to be transmitted is modulated by means of a modulator 127 that outputs a modulated RF signal at said intermediate frequency (IF). A first variable gain amplifier 123 (VGA) serves to readjust the signal amplitude of the signal. It is followed by a bandpass filter 125 (centered around 280 MHz) used for filtering the signal and removing unwanted signal components. The filtered signal is then upconverted with the aid of a mixer 116. A switch 114 coupled to the switch 118 serves to select the corresponding 2.450 GHz TX or 5.150 GHz to 5.875 GHz TX chain for further signal processing. When operating in the 2.450 GHz TX mode a second variable gain amplifier 107 (VGA) is used to readjust the signal amplitude of the upconverted 2.450 GHz signal in order to provide an adequate output power followed by a bandpass filter 111 (centered around 2.450 GHz) used for filtering the upconverted 2.450 GHz signal and removing unwanted mixing products. When operating in the 5.150 GHz to 5.875 GHz TX mode a second variable gain amplifier 108 (VGA) is used to readjust the signal amplitude of the upconverted 5.150 GHz to 5.875 GHz signal in order to provide an adequate output power followed by a bandpass filter 112 (centered around 5,400 MHz) used for filtering the upconverted 5.150 GHz to 5.875 GHz signal and removing unwanted mixing products. Finally, the upconverted RF signal is led to the antenna 101 by means of the switches 104 and 102 to be transmitted.

The object of the voltage controlled oscillator 119 (VCO1 is to provide a modulation frequency for said modulator 127 and said demodulator 126. The voltage controlled oscillators 120 (VCO2) and 121 (VCO3) act as local oscillators (LO) for the downconversion mixer 115 and the upconversion mixer 116, respectively. The output frequency of the voltage controlled oscillators 120 (VCO2) can be tuned within a range of 4,870 to 5,570 MHz; the output frequency of the voltage controlled oscillators 121 (VCO3) is 2,170 MHz. With the aid of the switch 117 coupled to switch 113 the downconversion mixer 115 can be provided with the correct mixing frequency. With the aid of the switch 118 coupled to switch 114 the upconversion mixer 116 can be provided with the correct mixing frequency.

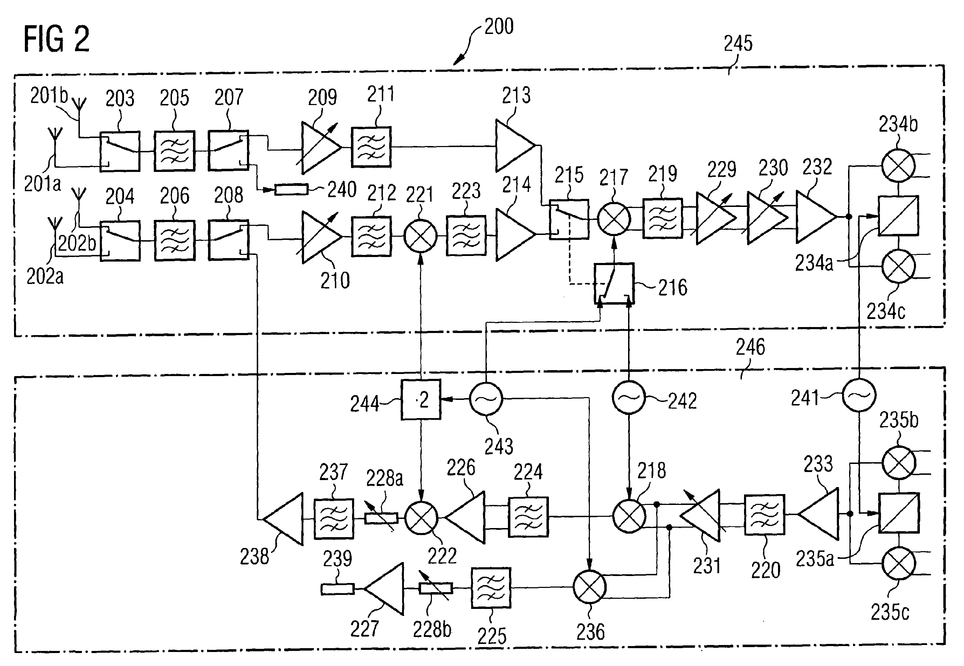

In the following the functions of the components comprised in a second embodiment of the underlying invention as depicted in block diagram 200 of figure 2 are explained.

The aforementioned block diagram 200 comprises a dual mode transceiver architecture for transmitting and receiving modulated radio frequency (RF) signals operating on at least two different frequency ranges in accordance with patent claims 14 to 26, having a first transmission chain ($TX_1$) and a first reception chain ($RX_1$) for a first frequency range, and a second transmission chain ($TX_2$) and a second reception chain ($RX_2$) for a second frequency range. Both said TX and said RX chains can also be applied separately within the scope of the corresponding transmitter and receiver devices, respectively.

2.450 GHz ISM (IEEE 802.11b) specific blocks

When receiving a signal from the two antennas 201a or 201b of the receive (RX) chain, the stronger signal component is selected with the first switch 203. After the first RF bandpass filter 205 used for the band selection and an image rejection, and a selection of the transmit or receive chain by a TX/RX selection switch 207 a first amplification with a first variable gain amplifier 209 (VGA) of the 2.450 GHz chain used as a low noise amplifier (LNA) is done followed by a second image rejection filter 211 and an amplification by an amplifier 213.

The transmit (TX) signal coming from the baseband unit is modulated with the aid of an I/Q modulator 235a and amplified by means of an amplifier 233 followed by a bandpass filter 220 to remove unwanted mixing products. After that the signal is amplified by means of a variable gain amplifier 231 (VGA) and upconverted by means of a mixer 236 followed by a bandpass filter 225 to remove unwanted mixing products. Then it is amplified to the allowed output power by an amplifier 227 preceded by a tunable attenuator 228b, switched to a second bandpass filter 205, and finally switched to the antenna diversity switch 203 of one of the two antennas 201a or 201b, respectively.

5.150 GHz to 5.875 GHz specific blocks

When receiving a signal from the two antennas 202a or 202b of the receive (RX) chain, the stronger signal component is selected with the first switch 204. After the first RF bandpass filter 206 used for the band selection and an image rejection, and a selection of th transmit or receive chain by a TX/RX selection switch 208 a first amplification with a first variable gain amplifier 210 (VGA) of the 5.150 GHz to 5.875 GHz chain used as a low noise amplifier (LNA) is done followed by a second bandpass filter 212 for further image rejection. A first downconversion to a high IF of approximately 120% of the covered frequency range (5.150 GHz to 5.875 GHz) is done by means of a mixer 221. After the mixing stage 221 first intermediate frequency ($IF_1$) filtering is done by means of a bandpass filter 223 followed by an amplifier stage 214 to compensate the filter losses.

The transmit (TX) signal coming from the baseband unit is modulated with the aid of an I/Q modulator 235a and amplified by means of an amplifier 233 followed by a bandpass filter 220 to remove unwanted mixing products. After that the signal is amplified by means of a variable gain amplifier 231 (VGA) and upconverted by a mixer 218 followed by a bandpass filter 224 to remove unwanted mixing products. Then it is amplified to the allowed output power by an amplifier 226. After being submitted to a second upconversion by means of the mixer 222, the signal is amplified to the allowed output power by an amplifier 238 preceded by a tunable attenuator 228a and a bandpass filter 237, switched to a second bandpass filter 206, and finally to the antenna diversity switch 204 of one of the two antennas 202a or 202b.

Shared blocks for receive (RX) operation

The signal from the two different chains for the 2.450 GHz band and the 5.150 GHz to 5.875 GHz band, respectively, is selected with a switch 215 followed by a second downconversion stage 217 and an intermediate frequency (IF) bandpass filter 219. At the output of this filter a final signal amplification by variable gain amplifier 229 and 230 (VGAs), an amplifier 232 and a demodulation of the signal by an I/Q demodulator 234a is done.

Shared blocks for transmit (TX) operation

The baseband signal is modulated with an I/Q modulator 235a followed by an amplification stage 233 and a bandpass filter 220 to remove unwanted mixing products amplified again to compensate the filter losses fed to the dedicated TX chains.

The following paragraphs refer to the generation of the local oscillator signals which are employed in said second embodiment of the present invention.

2.450 GHz ISM mode

The voltage controlled oscillator 243 (VCO3) acts as a local oscillator (LO) for the down-/upconversion mixer 217 and 236, and the voltage controlled oscillator 241 (VCO1) acts as a local oscillator (LO) for the I/Q modulator 235a or demodulator 234a, respectively.

Thereby, all parts of said transceiver architecture referring to the 5.150 GHz to 5.875 GHz RX/TX mode can be disabled. Likewise, the first intermediate frequency stage (1,200 MHz) used for the 5.150 GHz to 5.875 GHz operation can be disabled.

5.150 GHz to 5.875 GHz mode

The voltage controlled oscillator 243 (VCO3) followed by a frequency doubler 244 acts as a local oscillator (LO) for the first downconversion or upconversion to the high IF by means of the mixers 221 or 222, respectively, and a second voltage controlled oscillator 242 (VCO2) is used for the downconversion or upconversion to the shared IF frequency of the voltage controlled oscillator 242 (VCO2) by means of the mixers 217 or 218, respectively. The voltage controlled oscillator 241 (VCO1) does the same as described in the paragraph for 2.450 GHz ISM mode.

The meaning of the symbols designated with reference signs in figure 1 and figure 2 can be taken from the following table of reference signs.

Table of the depicted features and their corresponding reference signs

| No. | Feature |
| --- | --- |
| 100 | block diagram of the claimed dual mode transceiver architecture for digital wireless communication in accordance with the first embodiment of the present invention |

(continued)

| No. | Feature |
|-----|---------|
| 101 | TX/RX-antenna for transmitting or receiving a RF signal belonging to the 2.450 GHz TX/RX chain or to the 5.150 GHz to 5.875 GHz TX/RX chain, respectively |
| 102 | switch for switching between transmit (TX) operation or receive (RX) operation, respectively |
| 103 | switch for switching to the 2.450 GHz RX chain or the 5.150 GHz to 5.875 GHz RX chain, respectively |
| 104 | switch for switching to the 2.450 GHz TX chain or the 5.150 GHz to 5.875 GHz TX chain, respectively |
| 105 | first variable gain amplifier (VGA) for receive operation belonging to the 2.450 GHz RX chain used as a low noise amplifier (LNA) |
| 106 | first variable gain amplifier (VGA) for receive operation belonging to the 5.150 GHz to 5.875 GHz RX chain used as a low noise amplifier (LNA) |
| 107 | second variable gain amplifier (VGA) belonging to the 5.150 GHz to 5.875 GHz TX chain |
| 108 | second variable gain amplifier (VGA) belonging to the 2.450 GHz TX chain |
| 109 | first RF bandpass filter (around 2,450 MHz) belonging to the 2.450 GHz RX chain used for band selection and/or image rejection |
| 110 | first RF bandpass filter (around 5,400 MHz) belonging to the 5.150 GHz to 5.875 GHz RX chain used for band selection and/or image rejection |
| 111 | second RF bandpass filter (around 5,400 MHz) for transmit operation belonging to the 5.150 GHz to 5.875 GHz TX chain |
| 112 | second RF bandpass filter (around 2,450 MHz) for transmit operation belonging to the 2.450 GHz TX chain |
| 113 | switch for switching the 2.450 GHz RX chain or the 5.150 GHz to 5.875 GHz RX chain to the downconversion mixer 115 |
| 114 | switch for switching the upconverted signal coming from the upconversion mixer 116 to the 2.450 GHz TX chain or the 5.150 GHz to 5.875 GHz TX chain, respectively |
| 115 | downconversion mixer (= shared component of the 2.450 GHz RX chain and the 5.150 GHz to 5.875 GHz RX chain) |
| 116 | upconversion mixer (= shared component of the 2.450 GHz TX chain and the 5.150 GHz to 5.875 GHz TX chain) |
| 117 | switch, coupled with 113, for switching the signal of 120 (VCO2) or 121 (VCO3) to the downconversion mixer 115 |
| 118 | switch, coupled with 114, for switching the signal of 120 (VCO2) or 121 (VCO3) to the upconversion mixer 116 |
| 119 | first voltage controlled oscillator (VCO1) around 280 MHz for the modulation or demodulation, respectively (= shared component of the 2.450 GHz TX/RX chains and the 5.150 GHz to 5.875 GHz TX/RX chains) |
| 120 | second voltage controlled oscillator (VCO2) (range: 4,870 to 5,570 MHz) for downconversion or upconversion of the 5.150 GHz to 5.875 GHz TX/RX signal, respectively (= shared component of the 2.450 GHz TX/RX chains and the 5.150 GHz to 5.875 GHz TX/RX chains) |
| 121 | third voltage controlled oscillator (VCO3) around 2,170 MHz for downconversion or upconversion of the 2,450 MHz TX/RX signal, respectively (= shared component of the 2.450 GHz TX/RX chains and the 5.150 GHz to 5.875 GHZ TX/RX chains) |
| 122 | second variable gain amplifier (VGA) for receive operation (= shared component of the 2.450 GHz RX chain and the 5.150 GHz to 5.875 GHz RX chain) |
| 123 | first variable gain amplifier (VGA) for transmit operation (= shared component of the 2.450 GHz TX chain and the 5.150 GHz to 5.875 GHz TX chain) |
| 124 | intermediate frequency (IF) bandpass filter (around 280 MHz) used for filtering an intermediate frequency (IF) (= shared component of the 2.450 GHz RX chain and the 5.150 GHz to 5.875 GHz RX chain) |

(continued)

| No. | Feature |
|---|---|
| 125 | intermediate frequency (IF) bandpass filter (around 280 MHz) used for filtering an intermediate frequency (IF) (= shared component of the 2.450 GHz TX chain and the 5.150 GHz to 5.875 GHz TX chain) |
| 126 | demodulator (= shared component of the 2.450 GHz RX chain and the 5.150 GHz to 5.875 GHz RX chain) |
| 127 | modulator (= shared component of the 2.450 GHz TX chain and the 5.150 GHz to 5.875 GHz TX chain) |
| 128 | receive chains ($RX_1$, $RX_2$) of the claimed dual mode transceiver architecture for 2.450 GHz RX operation and 5.150 GHz to 5.875 GHz RX operation, respectively |
| 129 | transmit chains ($TX_1$, $TX_2$) of the claimed dual mode transceiver architecture for 2.450 GHz TX operation and 5.150 GHz to 5.875 GHz TX operation, respectively |
| 200 | block diagram of the claimed dual mode transceiver architecture for digital wireless communication in accordance with the second embodiment of the present invention |
| 201a | TX/RX-antenna for transmitting or receiving a RF signal belonging to the 2.450 GHz TX/RX chain |
| 201b | TX/RX-antenna for transmitting or receiving a RF signal belonging to the 2.450 GHz TX/RX chain |
| 202a | TX/RX-antenna for transmitting or receiving a RF signal belonging to the 5.150 GHz to 5.875 GHz TX/RX chain |
| 202b | TX/RX-antenna for transmitting or receiving a RF signal belonging to the 5.150 GHz to 5.875 GHz TX/RX chain |
| 203 | antenna diversity switch belonging to the 2.450 GHz TX/RX chain |
| 204 | antenna diversity switch belonging to the 5.150 GHz to 5.875 GHz TX/RX chain |
| 205 | first RF bandpass filter (around 2,450 MHz) belonging to the 2.450 GHz TX/RX chain used for band selection and image rejection |
| 206 | first RF bandpass filter (around 5,400 MHz) belonging to the 5.150 GHz to 5.875 GHz TX/RX chain used for band selection and image rejection |
| 207 | TX/RX selection switch belonging to the 2.450 GHz TX/RX chain |
| 208 | TX/RX selection switch belonging to the 5.150 GHz to 5.875 GHz TX/RX chain |
| 209 | first variable gain amplifier (VGA) belonging to the 2.450 GHz RX chain used as a low noise amplifier (LNA) |
| 210 | first variable gain amplifier (VGA) belonging to the 5.150 GHz to 5.875 GHz RX chain used as a low noise amplifier (LNA) |
| 211 | second bandpass filter (around 2,450 MHz) belonging to the 2.450 GHz RX chain used for image selection |
| 212 | second bandpàss filter (around 5,400 MHz) belonging to the 5.150 GHz to 5.875 GHz RX chain used for image selection |
| 213 | amplifier belonging to the 2.450 GHz RX chain |
| 214 | amplifier belonging to the 5.150 GHz to 5.875 GHz RX chain |
| 215 | switch for switching the 2.450 GHz RX chain or the 5.150 GHz to 5.875 GHz RX chain to the second downconversion mixer 217 |
| 216 | switch, coupled with 215, for switching the signal of 242 (VCO2) or 243 (VCO3) to the second downconversion mixer 217 |
| 217 | second downconversion mixer (= shared component of the 2.450 GHz RX chain and the 5.150 GHz to 5.875 GHz RX chain) |
| 218 | first upconversion mixer belonging to the 5.150 GHz to 5.875 GHz TX chain |
| 219 | intermediate frequency (IF) bandpass filter (around 280 MHz) used for filtering the second (low) intermediate frequency ($IF_2$) (= shared component of the 2.450 GHz RX chain and the 5.150 GHz to 5.875 GHz RX chain) |
| 220 | intermediate frequency (IF) bandpass filter (around 280 MHz) used for filtering the second (low) intermediate frequency ($IF_2$) (= shared component of the 2.450 GHz TX chain and the 5.150 GHz to 5.875 GHz TX chain) |
| 221 | first downconversion mixer belonging to the 5.150 GHz to 5.875 GHz RX chain |

(continued)

| No. | Feature |
|---|---|
| 222 | second upconversion mixer belonging to the 5.150 GHz to 5.875 GHz TX chain |
| 223 | third RF bandpass filter (around 1,200 MHz) belonging to the 5.150 GHz to 5.875 GHz RX chain used for filtering the first (high) intermediate frequency ($IF_1$) |
| 224 | third RF bandpass filter (around 1,200 MHz) belonging to the 5.150 GHz to 5.875 GHz TX chain used for filtering the first (high) intermediate frequency ($IF_1$) |
| 225 | second RF bandpass filter (around 2,450 MHz) belonging to the 2.450 GHz TX chain |
| 226 | amplifier belonging to the 5.150 GHz to 5.875 GHz TX chain |
| 227 | amplifier belonging to the 2.450 GHz TX chain |
| 228a | tunable attenuator belonging to the 5.150 GHz to 5.875 GHz TX chain |
| 228b | tunable attenuator belonging to the 2.450 GHz TX chain |
| 229 | variable gain amplifier (VGA) (= shared component of the 2.450 GHz RX chain and the 5.150 GHz to 5.875 GHz RX chain) |
| 230 | variable gain amplifier (VGA) (= shared component of the 2.450 GHz RX chain and the 5.150 GHz to 5.875 GHz RX chain) |
| 231 | variable gain amplifier (VGA) (= shared component of the 2.450 GHz TX chain and the 5.150 GHz to 5.875 GHz TX chain) |
| 232 | amplifier (= shared component of the 2.450 GHz RX chain and the 5.150 GHz to 5.875 GHz RX chain) |
| 233 | amplifier (= shared component of the 2.450 GHz TX chain and the 5.150 GHz to 5.875 GHz TX chain) |
| 234a | I/Q demodulator (= shared component of the 2.450 GHz RX chain and the 5.150 GHz to 5.875 GHz RX chain) |
| 234b | first mixer belonging to the I/Q demodulator (= shared component of the 2.450 GHz RX chain and the 5.150 GHz to 5.875 GHz RX chain) |
| 234c | second mixer belonging to the I/Q demodulator (= shared component of the 2.450 GHz RX chain and the 5.150 GHz to 5.875 GHz RX chain) |
| 235a | I/Q modulator (= shared component of the 2.450 GHz TX chain and the 5.150 GHz to 5.875 GHz TX chain) |
| 235b | first mixer belonging to the I/Q modulator (= shared component of the 2.450 GHz TX chain and the 5.150 GHz to 5.875 GHz TX chain) |
| 235c | second mixer belonging to the I/Q modulator (= shared component of the 2.450 GHz TX chain and the 5.150 GHz to 5.875 GHz TX chain) |
| 236 | first upconversion mixer belonging to the 2.450 GHz TX chain |
| 237 | second RF bandpass filter (around 5,400 MHz) belonging to the 5.150 GHz to 5.875 GHz TX chain |
| 238 | amplifier belonging to the 5.150 GHz to 5.875 GHz TX chain |
| 239 | connector symbol for the 2.450 GHz TX chain according to the IEEE 802.11b standard |
| 240 | connector symbol for the 2.450 GHz TX chain according to the IEEE 802.11b standard |
| 241 | first voltage controlled oscillator (VCO1) around 280 MHz for the I/Q-modulation or I/Q-demodulation, respectively (= shared component of the 2.450 GHz TX/RX chains and the 5.150 GHz to 5.875 GHz TX/RX chains) |
| 242 | second voltage controlled oscillator (VCO2) around 920 MHz for downconversion or upconversion, respectively, to the |
|  | shared intermediate frequency (IF) (= shared component of the 2.450 GHz RX chain and the 5.150 GHz to 5.875 GHz TX/RX chains) |

(continued)

| No. | Feature |
|---|---|
| 243 | third voltage controlled oscillator (VCO3) (range: 1,920 to 2,250 MHz) for the first and second downconversion or upconversion, respectively (= shared component of the 2.450 GHz TX/RX chains and the 5.150 GHz to 5.875 GHz TX/RX chains) |
| 244 | frequency doubler (= shared component of the 5.150 GHz to 5.875 GHz TX chain and the 5.150 GHz to 5.875 GHz RX chain) |
| 245 | receive chains (RX$_1$, RX$_2$) of the claimed dual mode transceiver architecture for 2.450 GHz RX operation and 5.150 GHz to 5.875 GHz RX operation, respectively |
| 246 | transmit chains (TX$_1$, TX$_2$) of the claimed dual mode transceiver architecture for 2.450 GHz TX operation and 5.150 GHz to 5.875 GHz TX operation, respectively |

In general, those skilled in the art will readily recognize that the realization of the underlying invention is not restricted to the above-described examples. Many modifications and variations may be made to the embodiments of the present invention disclosed herein without substantially departing from the scope of the invention as defined in the following claims.

**Claims**

1. A dual mode receiver for receiving modulated radio frequency (RF) signals operating on at least two different frequency ranges, having a first reception chain (RX1) for a first frequency range, and a second reception chain (RX2) for at least one second frequency range,
   wherein said dual mode receiver comprises:

   - at least one antenna (201a, 201b) for receiving radio frequency (RF) signals,
   - first and second frequency synthesizing means (243, 242) for providing at least a first and a second reference frequencies,
   - a frequency multiplier (244) for multiplying the first reference frequency to obtain a multiplied reference frequency,
   - switching means (215) for switching between said first and said second reception chain, respectively,
   - at least one first mixer (221) arranged in the second reception chain for a first signal downconversion of a received signal frequency within said first frequency range, using the multiplied reference frequency, at least one second mixer (217), capable of being selectively connected to at least one of the first and second frequency synthesizing means (243, 242), for a second signal downconversion of a signal frequency received via the second reception chain and downconverted by means of the at least one first mixer (221), and for the signal downconversion of a signal frequency received via the first reception chain.

2. A dual mode transmitter for transmitting modulated radio frequency (RF) signals operating on at least two different frequency ranges, having a first transmission chain (TX1) for a first frequency range, and a second transmission chain (TX2) for at least one second frequency range,
   wherein said dual mode transmitter comprises:

   - at least one antenna (202a, 202b) for transmitting radio frequency (RF) signals,
   - a first and second frequency synthesizing means (243, 242) for providing at least a first and second reference frequencies,
   - a frequency multiplier (244) for multiplying the first reference frequency to obtain a multiplied reference frequency,
   - at least one third mixer (218) arranged in the second transmission chain for a first signal upconversion of a signal frequency to be transmitted within said second frequency range, using the second reference frequency;
   - at least one fourth mixer (222) for a second signal upconversion of the signal frequency to be transmitted within said second frequency range and upconverted by means of the at least one third mixer (218), using the multiplied reference frequency,
   - at least one fifth mixer (236) arranged in the first transmission chain for a signal upconversion of a signal frequency to be transmitted within said first frequency range.

3.  A dual mode transceiver for transmitting and receiving modulated radio frequency (RF) signals operating on at least two different frequency ranges, comprising:

    - the dual mode receiver according to claim 1;
    - the dual mode transmitter according to claim 2;

    wherein the first and second frequency synthesizing means (243, 242) and the frequency multiplier (244) of the receiver correspond to the first and second frequency synthesizing means (243, 242) and the frequency multiplier (244) of the transmitter, respectively.

4.  A dual mode transceiver according to claim 3, comprising:

    - modulation means (235a) for modulating a RF carrier signal and providing a modulated RF signal in accordance with the data signal to be transmitted, and
    - demodulation means (234a) for demodulating a modulated RF signal in order to rebuild said data signal,
    - third frequency synthesizing means (241) for providing a third reference frequency,

    wherein said third frequency synthesizing means (241) is a voltage controlled oscillator (VCO1) that provides a third reference frequency for said modulation means (235a) and said demodulation means (239a).

5.  A dual mode transceiver according to anyone of the claims 3 to 4,
    wherein said second frequency synthesizing means (242) is a voltage controlled oscillator (VCO2) that provides the second reference frequency for said second mixer (217) for the second signal downconversion of a received signal frequency and said third mixer (218) for the first signal upconversion of a transmitted signal frequency.

6.  A dual mode transceiver according to anyone of the claims 3 to 5,
    wherein said first frequency synthesizing means (243) is a voltage controlled oscillator (VCO3) that provides a reference frequency for said second mixer (217) for the second signal downconversion of a received signal frequency, said fifth mixer (236) for the first signal upconversion of a transmitted signal frequency, and said frequency multiplier (244).

7.  A dual mode transceiver according to anyone of the claims 3 to 6,
    wherein said first mixer (221) for the first signal downconversion of a received signal frequency and said fourth mixer (222) for the second signal upconversion of a transmitted signal frequency are both supplied with the multiplied reference frequency , wherein said multiplied reference frequency is multiplied with a factor of two by said frequency multiplier (244).

8.  A dual mode transceiver according to anyone of the claims 3 to 7,
    wherein a first intermediate frequency (IF1) filtering means (223, 224) for filtering a first intermediate frequency (IF1) is used to provide an image rejection.

9.  A dual mode transceiver according to claim 8,
    wherein a second intermediate frequency (IF2) filtering means (219, 220) for filtering a second intermediate frequency (IF2), which is lower than the first intermediate frequency (IF1), is used to remove adjacent channel interferers.

10. A dual mode transceiver according to anyone of the claims 4 to 9,
    wherein said modulation means (235a) is an I/Q modulator and said demodulation means (234a) is an I/Q demodulator.

11. A dual mode transceiver according to anyone of the claims 3 to 10,
    wherein said first frequency range for a first transmission (TX1) and/or a first reception (RX1) of signals has a center frequency of 2.450 GHz.

12. A dual mode transceiver according to anyone of the claims 3 to 11,
    wherein said second frequency range for a second transmission (TX2) and/or a second reception (RX2) of signals is the range between 5.150 GHz and 5.875 GHz.

13. A dual mode transceiver according to the claims 8 to 12,

wherein said first intermediate frequency (IF1) has a value of 1,200 MHz.

**14.** A dual mode transceiver according to the claims 9 to 13,
wherein said second intermediate frequency (IF2) has a value of 280 MHz.

**15.** A method for receiving modulated radio frequency (RF) signals operating on at least two different frequency ranges, ,
having a first reception chain (RX1) for a first frequency range, and a second reception chain (RX2) for at least one
second frequency range,
comprising the steps of:

- receiving radio frequency (RF) signals,
- providing at least a first and a second reference frequencies,
- multiplying the first reference frequency to obtain a multiplied reference frequency,
- selectively switching between said first and said second reception chain,
- performing a first signal downconversion of a received signal frequency within said first frequency range, using
the multiplied reference frequency, in the second reception chain;
- selectively performing a second signal downconversion of a signal frequency received via the second reception
chain and downconverted in the step of the first signal downconversion, or the signal downconversion of a signal
frequency received via the first reception chain.

**16.** A method for receiving modulated radio frequency (RF) signals operating on at least two different frequency ranges
according to claim 15, comprising

performing a downconversion of a received radio frequency (RF) signal to at least one intermediate frequency
(IF), and
filtering said intermediate frequency (IF) and said radio frequency (RF), respectively, to remove adjacent channel
interferers and/or to perform an image rejection.

**17.** A method for transmitting modulated radio frequency (RF) signals operating on at least two different frequency
ranges, having a first transmission chain (TX1) for a first frequency range, and a second transmission chain (TX2)
for at least one second frequency range, comprising the steps of:

- transmitting radio frequency (RF) signals,
- providing at least a first and second reference frequencies,
- multiplying the first reference frequency to obtain a multiplied reference frequency,
- performing a first signal upconversion of a signal frequency to be transmitted within said second frequency
range, using the second reference frequency, in the second transmission chain;
- performing a second signal upconversion of the signal frequency to be transmitted within said second frequency
range and upconverted in the step of the first signal upconversion, using the multiplied reference frequency,
- performing a signal upconversion of a signal frequency to be transmitted within said first frequency range, in
the first transmission chain.

**18.** A method for transmitting modulated radio frequency (RF) signals operating on at least two different frequency
ranges according to claim 19, comprising

performing an upconversion of a signal at said intermediate frequency (IF) to said radio frequency (RF), and
filtering said intermediate frequency (IF) and said radio frequency (RF), respectively.

**19.** A method for transmitting and/or receiving modulated radio frequency (RF) signals operating on at least two different
frequency ranges, comprising:

- the method for receiving according to claim 15;
- the method for transmitting according to claim 17.

**20.** A method for transmitting and/or receiving modulated radio frequency (RF) signals operating on at least two different
frequency ranges according to claim 19, comprising

- performing a downconversion of a received radio frequency (RF) signal to at least one intermediate frequency (IF), and
- filtering for said intermediate frequency (IF) and said radio frequency (RF), respectively, to remove adjacent channel interferers and/or to perform an image rejection;
- performing an upconversion of a signal at said intermediate frequency (IF) to said radio frequency (RF), and
- filtering for said intermediate frequency (IF) and said radio frequency (RF), respectively.

21. A mobile telecommunications device,
**characterized in that**
it comprises a dual mode receiver according to claim 1.

22. A mobile telecommunications device,
**characterized in that**
it comprises a dual mode transmitter according to claim 2.

23. A mobile telecommunications device,
**characterized in that**
it comprises a dual mode transceiver according to anyone of the claims 3 to 14.

**Patentansprüche**

1. Dualband-Empfänger zum Empfang modulierter Radiofrequenz-(RF-)-Signale, welcher in mindestens zwei verschiedenen Frequenzbereichen arbeitet, mit einer ersten Empfangskette (RX1) für einen ersten Frequenzbereich und einer zweiten Empfangskette (RX2) für mindestens einen zweiten Frequenzbereich, wobei der Dualband-Empfänger aufweist:

   - mindestens eine Antenne (201 a, 201 b) zum Empfang von Radiofrequenz-(RF-)-Signalen,
   - ein erstes und ein zweites Frequenzsynthesemittel (243, 242) zur Bereitstellung mindestens einer ersten und einer zweiten Bezugsfrequenz,
   - einen Frequenzvervielfacher (244) zur Vervielfachung der ersten Bezugsfrequenz, um eine vervielfachte Bezugsfrequenz zu erhalten,
   - Schaltmittel (215) zur Umschaltung zwischen der ersten bzw. zweiten Empfangskette,
   - mindestens einen in der zweiten Empfangskette angeordneten ersten Mischer (221) für eine erste Signal-Abwärtsmischung einer empfangenen Signalfrequenz innerhalb des ersten Frequenzbereichs mittels der vervielfachten Bezugsfrequenz,
   - mindestens einen selektiv mit mindestens einem ersten und zweiten Frequenzsynthesemittel (243, 242) verbindbaren zweiten Mischer (217) für eine zweite Signal-Abwärtsmischung einer Signalfrequenz, die über die zweite Empfangskette empfangen und mindestens mittels eines ersten Mischers (221) abwärtsgemischt worden ist, und für die Signal-Abwärtsmischung einer über die erste Empfangskette empfangenen Signalfrequenz.

2. Dualband-Sender zur Übertragung modulierter Radiofrequenz-(RF-)-Signale, welcher in mindestens zwei verschiedenen Frequenzbereichen arbeitet, mit einer ersten Sendekette (TX1) für einen ersten Frequenzbereich und einer zweiten Sendekette (TX2) für mindestens einen zweiten Frequenzbereich,
wobei der Dualband-Sender aufweist:

   - mindestens eine Antenne (202a, 202b) zur Übertragung von Radiofrequenz-(RF-)-Signalen,
   - ein erstes und zweites Frequenzsynthesemittel (243, 242) zur Bereitstellung mindestens einer ersten und einer zweiten Bezugsfrequenz,
   - einen Frequenzvervielfacher (244) zur Vervielfachung der ersten Bezugsfrequenz, um eine vervielfachte Bezugsfrequenz zu erhalten,
   - mindestens einen in der zweiten Sendekette angeordneten dritten Mischer (218) für eine erste Signal-Aufwärtsmischung einer im zweiten Frequenzbereich zu übertragenden Signalfrequenz mittels der zweiten Bezugsfrequenz,
   - mindestens einen vierten Mischer (222) für eine zweite Signal-Aufwärtsmischung der Signalfrequenz, die im zweiten Frequenzbereich übertragen werden soll und mittels des mindestens einen dritten Mischers (218) mit der vervielfachten Bezugsfrequenz aufwärtsgemischt worden ist,
   - mindestens einen in der ersten Sendekette angeordneten fünften Mischer (236) für eine Signal-Aufwärtsmischung einer im ersten Frequenzbereich zu übertragenden Signalfrequenz.

3.  Dualband-Sende-/Empfangseinrichtung für Übertragung und Empfang modulierter Radiofrequenz-(RF-)-Signale, welches in mindestens zwei verschiedenen Frequenzbereichen arbeitet und aufweist:

    - den Dualband-Empfänger nach Anspruch 1;
    - den Dualband-Sender nach Anspruch 2;

4.  Dualband-Sende-/Empfangseinrichtung nach Anspruch 3, welche aufweist:

    - Modulationsmittel (235a) zur Modulation eines RF-Trägersignals und zur Bereitstellung eines modulierten RF-Signals anhand des zu übertragenden Datensignals, und
    - Demodulationsmittel (234a) zur Demodulation eines RF-Trägersignals, um das Datensignal wiederherzustellen,
    - drittes Frequenzsynthesemittel (241) zur Bereitstellung einer dritten Bezugsfrequenz,

    wobei das dritte Frequenzsynthesemittel (241) ein spannungsgesteuerter Oszillator (VCO1) ist, der eine dritte Bezugsfrequenz für das Modulationsmittel (235a) und das Demodulationsmittel (234a) bereitstellt.

5.  Dualband-Sende-/Empfangseinrichtung nach einem der Ansprüche 3 bis 4,
    wobei das zweite Frequenzsynthesemittel (242) ein spannungsgesteuerter Oszillator (VCO2) ist, der die zweite Bezugsfrequenz dem zweiten Mischer (217) zur zweiten Signal-Abwärtsmischung einer empfangenen Signalfrequenz und dem dritten Mischer (218) für die erste Signal-Aufwärtsmischung einer zu übertragenden Signalfrequenz bereitstellt.

6.  Dualband-Sende-/Empfangseinrichtung nach einem der Ansprüche 3 bis 5,
    wobei das erste Frequenzsynthesemittel (243) ein spannungsgesteuerter Oszillator (VCO3) ist, der eine Bezugsfrequenz dem zweiten Mischer (217) zur zweiten Signal-Abwärtsmischung einer empfangenen Signalfrequenz und dem fünften Mischer (236) für die erste Signal-Aufwärtsmischung einer zu übertragenden Signalfrequenz sowie dem Frequenzvervielfacher bereitstellt.

7.  Dualband-Sende-/Empfangseinrichtung nach einem der Ansprüche 3 bis 6,
    wobei der erste Mischer (221) für die erste Signal-Abwärtsmischung einer empfangenen Signalfrequenz und der vierte Mischer für die zweite Signal-Aufwärtsmischung einer übertragenen Signalfrequenz mit der vervielfachten Bezugsfrequenz versorgt werden, wobei der Frequenzvervielfacher (244) die vervielfachte Bezugsfrequenz mit einem Faktor 2 vervielfacht.

8.  Dualband-Sende-/Empfangseinrichtung nach einem der Ansprüche 3 bis 7,
    wobei ein erstes Zwischenfrequenz-(IF1)-Filtermittel (223, 224) zur Filterung einer ersten Zwischenfrequenz (IF1) für eine Spiegelselektion verwendet wird.

9.  Dualband-Sende-/Empfangseinrichtung nach Anspruch 8,
    wobei eine zweites Zwischenfrequenz-(IF2)-Filtermittel (219, 220) zur Filterung einer zweiten Zwischenfrequenz (IF2), die unter der ersten Zwischenfrequenz (IF1) liegt, zur Beseitigung von Nachbarkanal-Störern verwendet wird.

10. Dualband-Sende-/Empfangseinrichtung nach einem der Ansprüche 4 bis 9,
    wobei das Modulationsmittel (235a) ein I/Q-Modulator und das Demodulationsmittel (234a) ein I/Q-Demodulator ist.

11. Dualband-Sende-/Empfangseinrichtung nach einem der Ansprüche 3 bis 10,
    wobei der erste Frequenzbereich für eine erste Übertragung (TX1) und/oder einen ersten Empfang (RX1) von Signalen eine Mittenfrequenz von 2 450 GHz aufweist.

12. Dualband-Sende-/Empfangseinrichtung nach einem der Ansprüche 3 bis 11,
    wobei der zweite Frequenzbereich für eine zweite Übertragung (TX2) und/oder einen zweiten Empfang (RX2) von Signalen zwischen 5 150 GHz und 5 875 GHz liegt.

13. Dualband-Sende-/Empfangseinrichtung nach den Ansprüchen 8 bis 12,
    wobei die erste Zwischenfrequenz (IF1) einen Wert von 1 200 MHz hat.

14. Dualband-Sende-/Empfangseinrichtung nach den Ansprüchen 9 bis 13,

wobei die zweite Zwischenfrequenz (IF2) einen Wert von 280 MHz hat.

**15.** Verfahren zum Empfang modulierter Radiofrequenz-(RF-)-Signale, welches in mindestens zwei verschiedenen Frequenzbereichen arbeitet, mit einer ersten Empfangskette (RX1) für einen ersten Frequenzbereich und einer zweiten Empfangskette (RX2) für mindestens einen zweiten Frequenzbereich, welches folgende Schritte aufweist:

- Empfang von Radiofrequenz-(RF-)-Signalen,
- Bereitstellung mindestens einer ersten und einer zweiten Bezugsfrequenz,
- Vervielfachung der ersten Bezugsfrequenz, um eine vervielfachte Bezugsfrequenz zu erhalten,
- selektive Umschaltung zwischen der ersten und der zweiten Empfangskette,
- Durchführung einer ersten Signal-Abwärtsmischung einer innerhalb des ersten Frequenzbereichs empfangenen Signalfrequenz mittels der vervielfachten Bezugsfrequenz in der zweiten Empfangskette;
- selektive Durchführung entweder einer zweiten Signal-Abwärtsmischung einer über die zweite Empfangskette empfangenen und im Schritt der ersten Abwärtsmischung abwärtsgemischten Signalfrequenz oder Signal-Abwärtsmischung einer über die erste Empfangskette empfangenen Signalfrequenz.

**16.** Verfahren nach Anspruch 15 zum Empfang modulierter Radiofrequenz-(RF-)-Signale, welches in mindestens zwei verschiedenen Frequenzbereichen arbeitet, welches aufweist:

- Durchführung einer Abwärtsmischung eines empfangenen Radiofrequenz-(RF-)-Signals auf mindestens eine Zwischenfrequenz (IF), und
- Filterung der Zwischenfrequenz (IF) bzw. der Radiofrequenz (RF) zur Beseitigung von Nachbarkanal-Störern und/oder zur Spiegelselektion.

**17.** Verfahren zur Übertragung modulierter Radiofrequenz-(RF-)-Signale, welches in mindestens zwei verschiedenen Frequenzbereichen arbeitet, mit einer ersten Sendekette (TX1) für einen ersten Frequenzbereich und einer zweiten Sendekette (TX2) für mindestens einen zweiten Frequenzbereich, welches folgende Schritte aufweist:

- Übertragung von Radiofrequenz-(RF-)-Signalen,
- Bereitstellung mindestens einer ersten und einer zweiten Bezugsfrequenz,
- Vervielfachung der ersten Bezugsfrequenz, um eine vervielfachte Bezugsfrequenz zu erhalten,
- Durchführung einer ersten Signal-Aufwärtsmischung einer innerhalb des zweiten Frequenzbereichs zu übertragenden Signalfrequenz mittels der zweiten Bezugsfrequenz in der zweiten Sendekette;
- Durchführung einer zweiten Signal-Aufwärtsmischung einer im zweiten Frequenzbereich zu übertragenden und im Schritt der ersten Signal-Aufwärtsmischung aufwärtsgemischten Signalfrequenz mittels der vervielfachten Bezugsfrequenz;
- Durchführung einer Signal-Aufwärtsmischung einer im ersten Frequenzbereich zu übertragenden Signalfrequenz in der ersten Sendekette.

**18.** Verfahren nach Anspruch 19 zur Übertragung modulierter Radiofrequenz-(RF-)-Signale, welches in mindestens zwei verschiedenen Frequenzbereichen arbeitet, welches aufweist:

- Durchführung einer Aufwärtsmischung eines Signals auf dieser Zwischenfrequenz (IF) zur Radiofrequenz (RF), und
- Filterung der Zwischenfrequenz (IF) bzw. der Radiofrequenz (RF).

**19.** Verfahren für Übertragung und/oder Empfang modulierter Radiofrequenz-(RF-)-Signale, welches in mindestens zwei verschiedenen Frequenzbereichen arbeitet und aufweist:

- das Empfangsverfahren nach Anspruch 15;
- das Übertragungsverfahren nach Anspruch 17.

**20.** Verfahren nach Anspruch 19 zum Empfang modulierter Radiofrequenz-(RF-)-Signale, welches in mindestens zwei verschiedenen Frequenzbereichen arbeitet und aufweist:

- Durchführung einer Abwärtsmischung eines empfangenen Radiofrequenz-(RF-)-Signals auf mindestens eine Zwischenfrequenz (IF), und
- Filterung der Zwischenfrequenz (IF) bzw. der Radiofrequenz (RF) zur Beseitigung von Nachbarkanal-Störern und/oder zur Spiegelselektion;

- Durchführung einer Aufwärtsmischung eines Signals auf dieser Zwischenfrequenz (IF) zur Radiofrequenz (RF), und
- Filterung der Zwischenfrequenz (IF) bzw. der Radiofrequenz (RF).

**21.** Mobiles Telekommunikationsgerät,
**dadurch gekennzeichnet, dass**
es einen Dualband-Empfänger nach Anspruch 1 enthält.

**22.** Mobiles Telekommunikationsgerät,
**dadurch gekennzeichnet, dass**
es einen Dualband-Sender nach Anspruch 2 enthält.

**23.** Mobiles Telekommunikationsgerät,
**dadurch gekennzeichnet, dass**
es eine Dualband-Sende-/Empfangseinrichtung nach einem der Ansprüche 3 bis 14 enthält.

**Revendications**

**1.** Récepteur à deux modes pour recevoir des signaux de radiofréquence (RF) modulés opérant sur au moins deux gammes de fréquences différentes, comprenant une première chaîne de réception (RX1) pour une première gamme de fréquences, et une deuxième chaîne de réception (RX2) pour au moins une deuxième gamme de fréquences, dans lequel ledit récepteur à deux modes comprend:

- au moins une antenne (201a, 201b) pour recevoir des signaux de radiofréquence (RF);
- des premier et deuxième moyens de synthétisation de fréquence (243, 242) pour produire au moins une première et une deuxième fréquences de référence;
- un multiplicateur de fréquence (244) pour multiplier la première fréquence de référence pour obtenir une fréquence de référence multipliée;
- un moyen de commutation (215) pour commuter entre lesdites première et deuxième chaînes de réception, respectivement; et
- au moins un premier mélangeur (221) agencé dans la deuxième chaîne de réception pour effectuer un premier abaissement de fréquence de signal d'une fréquence de signal reçue à l'intérieur de ladite première gamme de fréquences, en utilisant la fréquence de référence multipliée, au moins un deuxième mélangeur (217) capable d'être sélectivement connecté à au moins un des premier et deuxième moyens de synthétisation de fréquence (243, 242), pour effectuer un deuxième abaissement de fréquence de signal d'une fréquence de signal reçue par l'intermédiaire de la deuxième chaîne de réception et abaissée au moyen dudit au moins un premier mélangeur (221), et pour effectuer l'abaissement de fréquence de signal d'une fréquence de signal reçue par l'intermédiaire de la première chaîne de réception.

**2.** Emetteur à deux modes pour émettre des signaux de radiofréquence (RF) modulés opérant sur au moins deux gammes de fréquences différentes, comprenant une première chaîne d'émission (RX1) pour une première gamme de fréquences, et une deuxième chaîne d'émission (RX2) pour au moins une deuxième gamme de fréquences, dans lequel ledit émetteur à deux modes comprend:

- au moins une antenne (202a, 202b) pour émettre des signaux de radiofréquence (RF);
- des premier et deuxième moyens de synthétisation de fréquence (243, 242) pour produire au moins une première et une deuxième fréquences de référence;
- un multiplicateur de fréquence (244) pour multiplier la première fréquence de référence pour obtenir une fréquence de référence multipliée;
- au moins un troisième mélangeur (218) agencé dans la deuxième chaîne d'émission pour effectuer une première augmentation de fréquence de signal d'une fréquence de signal à émettre à l'intérieur de ladite deuxième gamme de fréquences, en utilisant la deuxième fréquence de référence;
- au moins un quatrième mélangeur (222) pour effectuer une deuxième augmentation de fréquence de signal de la fréquence de signal à émettre à l'intérieur de ladite deuxième gamme de fréquences et augmentée au moyen dudit au moins un troisième mélangeur (218), en utilisant la fréquence de référence multipliée; et
- au moins un cinquième mélangeur (236) agencé dans la première chaîne d'émission pour effectuer une augmentation de fréquence de signal d'une fréquence de signal à émettre à l'intérieur de ladite première gamme de fréquences.

3. Emetteur-récepteur à deux modes pour émettre et recevoir des signaux de radiofréquence modulés (RF) opérant sur au moins deux gammes de fréquences différentes, comprenant:

- le récepteur à deux modes selon la revendication 1;
- l'émetteur à deux modes selon la revendication 2;

dans lequel les premier et deuxième moyens de synthétisation de fréquence (243, 242) et le multiplicateur de fréquence (244) du récepteur correspondent aux premier et deuxième moyens de synthétisation de fréquence (243, 242) et au multiplicateur de fréquence (244) de l'émetteur, respectivement.

4. Emetteur-récepteur à deux modes selon la revendication 3, comprenant:

- un moyen de modulation (235a) pour moduler un signal porteur RF et pour fournir un signal RF modulé selon le signal de données à émettre; et
- un moyen de démodulation (234a) pour démoduler un signal RF modulé en vue de reconstituer ledit signal de données; et
- un troisième moyen de synthétisation de fréquence (241) pour produire une troisième fréquence de référence;

dans lequel ledit troisième moyen de synthétisation de fréquence (241) est un oscillateur commandé en tension (VC01) qui produit une troisième fréquence de référence pour ledit moyen de modulation (235a) et ledit moyen de démodulation (234a).

5. Emetteur-récepteur à deux modes selon l'une quelconque des revendications 3 et 4, dans lequel ledit deuxième moyen de synthétisation de fréquence (242) est un oscillateur commandé en tension (VCO2) qui produit la deuxième fréquence de référence pour ledit deuxième mélangeur (217) pour effectuer le deuxième abaissement de fréquence de signal d'une fréquence de signal reçue, et pour ledit troisième mélangeur (218) pour effectuer la première augmentation de fréquence de signal d'une fréquence de signal émise.

6. Emetteur-récepteur à deux modes selon l'une quelconque des revendications 3 à 5, dans lequel ledit premier moyen de synthétisation de fréquence (243) est un oscillateur commandé en tension (VCO3) qui produit une fréquence de référence pour ledit deuxième mélangeur (217) pour effectuer le deuxième abaissement de fréquence de signal d'une fréquence de signal reçue, pour ledit cinquième mélangeur (236) pour effectuer la première augmentation de fréquence de signal d'une fréquence de signal émise, et pour ledit multiplicateur de fréquence (244).

7. Emetteur-récepteur à deux modes selon l'une quelconque des revendications 3 à 6, dans lequel ledit premier mélangeur (221) pour effectuer le premier abaissement de fréquence de signal d'une fréquence de signal reçue et ledit quatrième mélangeur (222) pour effectuer la deuxième augmentation de fréquence de signal d'une fréquence de signal émise reçoivent tous les deux la fréquence de référence multipliée, dans lequel ladite fréquence de référence multipliée est multipliée avec un facteur de deux par ledit multiplicateur de fréquence (244).

8. Emetteur-récepteur à deux modes selon l'une quelconque des revendications 3 à 7, dans lequel un premier moyen de filtrage de fréquence intermédiaire (IF1) (223, 224) pour filtrer une première fréquence intermédiaire (IF1) est utilisé pour exécuter un affaiblissement sur la fréquence image.

9. Emetteur-récepteur à deux modes selon la revendication 8, dans lequel un deuxième moyen de filtrage de fréquence intermédiaire (IF2) (219, 220) pour filtrer une deuxième fréquence intermédiaire (IF2), qui est inférieure à la première fréquence intermédiaire (IF1), est utilisé pour éliminer les interférences des canaux voisins.

10. Emetteur-récepteur à deux modes selon l'une quelconque des revendications 4 à 9, dans lequel ledit moyen de modulation (235a) est un modulateur I/Q, et ledit moyen de démodulation (234a) est un démodulateur I/Q.

11. Emetteur-récepteur à deux modes selon l'une quelconque des revendications 3 à 10, dans lequel ladite première gamme de fréquences pour une première émission (TX1) et/ou une première réception (RX1) de signaux présente une fréquence centrale de 2,450 GHz.

**12.** Emetteur-récepteur à deux modes selon l'une quelconque des revendications 3 à 11, dans lequel ladite deuxième gamme de fréquences pour une deuxième émission (TX2) et/ou une deuxième réception (RX2) de signaux est comprise dans la gamme de 5,150 GHz à 5,875 GHz.

**13.** Emetteur-récepteur à deux modes selon l'une quelconque des revendications 8 à 12, dans lequel ladite première fréquence intermédiaire (IF1) présente une valeur de 1200 MHz.

**14.** Emetteur-récepteur à deux modes selon l'une quelconque des revendications 9 à 13, dans lequel ladite deuxième fréquence intermédiaire (IF2) présente une valeur de 280 MHz.

**15.** Procédé pour recevoir des signaux de radiofréquence (RF) modulés opérant sur au moins deux gammes de fréquences différentes, comprenant une première chaîne de réception (RX1) pour une première gamme de fréquences, et une deuxième chaîne de réception (RX2) pour au moins une deuxième gamme de fréquences, comprenant les étapes consistant à:

- recevoir des signaux de radiofréquence (RF);
- produire au moins une première et une deuxième fréquences de référence;
- multiplier la première fréquence de référence pour obtenir une fréquence de référence multipliée;
- commuter sélectivement entre ladite première et ladite deuxième chaînes de réception;
- exécuter un premier abaissement de fréquence de signal d'une fréquence de signal reçue à l'intérieur de ladite première gamme de fréquences, en utilisant la fréquence de référence multipliée, dans la deuxième chaîne de réception; et
- exécuter sélectivement un deuxième abaissement de fréquence de signal d'une fréquence de signal reçue par l'intermédiaire de la deuxième chaîne de réception et abaissée lors de l'étape de premier abaissement de fréquence de signal, ou l'abaissement de fréquence de signal d'une fréquence de signal reçue par l'intermédiaire de la première chaîne de réception.

**16.** Procédé pour recevoir des signaux de radiofréquence (RF) modulés opérant sur au moins deux gammes de fréquence différentes selon la revendication 15, comprenant les étapes consistant à:

- exécuter un abaissement de fréquence d'un signal de radiofréquence (RF) reçu à au moins une fréquence intermédiaire (IF); et
- filtrer ladite fréquence intermédiaire (IF) et ladite radiofréquence (RF), respectivement, pour éliminer les interférences des canaux voisins et/ou pour exécuter un affaiblissement sur la fréquence image.

**17.** Procédé pour émettre des signaux de radiofréquence (RF) modulés opérant sur au moins deux gammes de fréquences différentes, comprenant une première chaîne d'émission (TX1) pour une première gamme de fréquences, et une deuxième chaîne d'émission (TX2) pour au moins une deuxième gamme de fréquences, comprenant les étapes consistant à:

- émettre des signaux de radiofréquence (RF);
- produire au moins une première et une deuxième fréquences de référence;
- multiplier la première fréquence de référence pour obtenir une fréquence de référence multipliée;
- exécuter une premières augmentation de fréquence de signal d'une fréquence de signal reçue à l'intérieur de ladite deuxième gamme de fréquences, en utilisant la deuxième fréquence de référence, dans la deuxième chaîne d'émission; et
- exécuter une deuxième augmentation de fréquence de signal de la fréquence de signal à émettre à l'intérieur de ladite deuxième gamme de fréquences et augmentée lors de l'étape de première augmentation de fréquence de signal, en utilisant la fréquence de référence multipliée; et
- exécuter une augmentation de fréquence de signal d'une fréquence de signal à émettre à l'intérieur de ladite première gamme de fréquences, dans la première chaîne d'émission.

**18.** Procédé pour émettre des signaux de radiofréquence (RF) modulés opérant sur au moins deux gammes de fréquences différentes selon la revendication 17, comprenant les étapes consistant à:

- exécuter une augmentation de fréquence d'un signal à ladite fréquence intermédiaire (IF) vers ladite radiofréquence (RF); et
- filtrer ladite fréquence intermédiaire (IF) et ladite radiofréquence (RF), respectivement.

**19.** Procédé pour émettre et/ou recevoir des signaux de radiofréquence (RF) modulés opérant sur au moins deux gammes de fréquence différentes, comprenant:

- le procédé de réception selon la revendication 15; et
- le procédé d'émission selon la revendication 17.

**20.** Procédé pour émettre et/ou recevoir des signaux de radiofréquence (RF) modulés opérant sur au moins deux gammes de fréquence différentes selon la revendication 19, comprenant les étapes consistant à:

- exécuter un abaissement de fréquence d'un signal de radiofréquence (RF) reçu à au moins une fréquence intermédiaire (IF);
- filtrer ladite fréquence intermédiaire (IF) et ladite radiofréquence (RF), respectivement, pour éliminer les interférences des canaux voisins et/ou pour exécuter un affaiblissement sur la fréquence image;
- exécuter une augmentation de fréquence d'un signal à ladite fréquence intermédiaire (IF) vers ladite radiofréquence (RF); et
- filtrer ladite fréquence intermédiaire (IF) et ladite radiofréquence (RF), respectivement.

**21.** Dispositif de télécommunication mobile, **caractérisé en ce qu'**il comprend un récepteur à deux modes selon la revendication 1.

**22.** Dispositif de télécommunication mobile, **caractérisé en ce qu'**il comprend un émetteur à deux modes selon la revendication 2.

**23.** Dispositif de télécommunication mobile, **caractérisé en ce qu'**il comprend un émetteur-récepteur à deux modes selon l'une quelconque des revendication 3 à 14.

FIG 1

EP 1 261 142 B1

FIG 2

## REFERENCES CITED IN THE DESCRIPTION

**Patent documents cited in the description**

- US 5732330 A
- EP 0878917 A2
- EP 1059734 A2
- EP 0744831 A2
- EP 0793356 A2
- US 5640694 A
- GB 2320631 A